# EUROPÄISCHE PATENTSCHRIFT

(11) **EP 2 152 466 B1**
(45) Veröffentlichungstag und Bekanntmachung des Hinweises auf die Patenterteilung: **03.12.2014**
(21) Anmeldenummer: 08749047.0
(22) Anmeldetag: 22.04.2008
(51) Int. Cl.: B23P 11/02, H05B 6/14

(54) **SCHRUMPFSPULE MIT DIREKTER WERKZEUGKÜHLUNG**
SHRINKING COIL WITH DIRECT TOOL COOLING
BOBINE RÉTRACTABLE À REFROIDISSEMENT DIRECT D'OUTILS

(30) Priorität: 01.06.2007 DE 202007007837 U
(43) Veröffentlichungstag der Anmeldung: 17.02.2010
(60) Teilanmeldung: 13186609.7
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Bockhorni & Kollegen
(86) Internationale Anmeldenummer: PCT/EP2008/003223
(87) Internationale Veröffentlichungsnummer: WO 2008/145234

(56) Entgegenhaltungen:
- DE-A1- 10 121 743
- DE-A1-102005 003 855
- DE-A1-102005 004 166
- DE-A1-102005 005 892
- DE-A1-102005 025 459
- US-B1- 6 861 625

## Beschreibung

Die Erfindung betrifft eine Vorrichtung zum Ein- und/oder Ausspannen von einen Werkzeugschaft aufweisenden Werkzeugen in ein Werkzeugspannfutter mittels Schrumpfverbund zwischen dem Werkzeugspannfutter und dem Werkzeugschaft.

Eine derartige Vorrichtung ist z. B. aus der deutschen Patentanmeldung DE 103 48 880 A1 bekannt, die den grundlegenden Aufbau und die Funktion einer solchen Vorrichtung im Detail beschreibt.

Ein generelles Problem bei derartigen Vorrichtungen stellt das Wiederabkühlen des jeweiligen, zum Zwecke des Ein- oder Ausspannens erhitzten Werkzeugspannfutters dar. Zum einen, weil die für das Abkühlen benötigte Zeit tendenziell die insgesamt für den Werkzeugwechsel benötigte Zeit bis zur Bereitstellung eines wiedereinsatzfahigen Werkzeugs verlängert. Zum anderen, weil das manuelle Entnehmen von noch heißen Werkzeugspannfuttern mit einer erheblichen Unfallgefahr verbunden ist.

Es ist daher bereits in Betracht gezogen worden, eine Kühlung mittels fester Kühlkörper vorzunehmen, d. h. dadurch, dass man das Werkzeugspannfutter mit einem anderen, gut wärmeleitenden Festkörper in innigen Kontakt bringt, in den dann die im Werkzeugspannfutter gespeicherte Wärme schnell abfließt.

Eine derartige Kühlung ist jedoch in der Praxis relativ schwer zu bewerkstelligen. Es muss zwingend ein inniger Flächenkontakt zwischen Futter und Kühlkörper bestehen, da nur so effizient Wärme abgeleitet werden kann. Die Werkzeugspannfutter bzw. deren das eigentliche Spannen bewirkenden Hülsenpartien müssen eine konische Außenkontur haben, da sich nur so ein hinreichend inniger Kontakt herstellen lässt. Bei zylindrischen Futtern ist die Herstellung des benötigten Flächenkontaktes schwierig. In jedem Fall müssen der Kühlkörper und das Futter aufeinander abgestimmt sein. Eine echte Integration des Kühlkörpers in die Spuleneinheit ist nicht möglich. Das Erwärmen und Kühlen hat also an verschiedenen Stellen zu erfolgen. Folglich sind heiße Futter zu handhaben. Ein derartiges Kühlen vollständig oder zumindest weitgehend zu automatisieren bereitet erhebliche Schwierigkeiten.

In der Praxis erfolgt daher im Regelfall eine Kühlung mit Wasser - dergestalt, dass das Futter aus der Spannvorrichtung entnommen und in ein Wasserbad eingetaucht oder abgebraust wird. Auch das hat erhebliche Nachteile, da wiederum kaum eine Integration in die Spuleneinheit möglich ist, sondern abermals das heiße Futter gehandhabt werden muss. Erst recht ist bei einer derartigen Kühlung nur schwerlich eine weitgehende bzw. vollständige Automatisierung möglich. Zudem wird das Futter komplett nass. Es muss anschließend sorgfältig getrocknet werden, was aufwändig ist. Insgesamt ist auch bei einer derartigen Kühlung eine lange Zykluszeit erforderlich.

In der DE 10 2005 025459 A1 ist eine Vorrichtung zum Ein- und/oder Ausspannen mit einem Kühlmittelkanal gezeigt.

Demgemäß ist es die Aufgabe der Erfindung eine Ein- bzw. Ausspannvorrichtung der bekannten Art dahingehend zu verbessern, dass das heiße Futter an Ort und Stelle gekühlt wird, d. h. ohne dass das heiße Futter aus der Spule herausgezogen werden muss.

Diese Aufgabe wird gelöst durch Vorrichtungen gemäß den Ansprüchen 1, 4, 5, 6. Die Vorteile und Wirkungsweise insbesondere auch der von den Unteransprüchen vorgesehenen speziellen Ausführungsarten ergeben sich aus der nachfolgenden Figurenbeschreibung für die Ausführungsbeispiele.

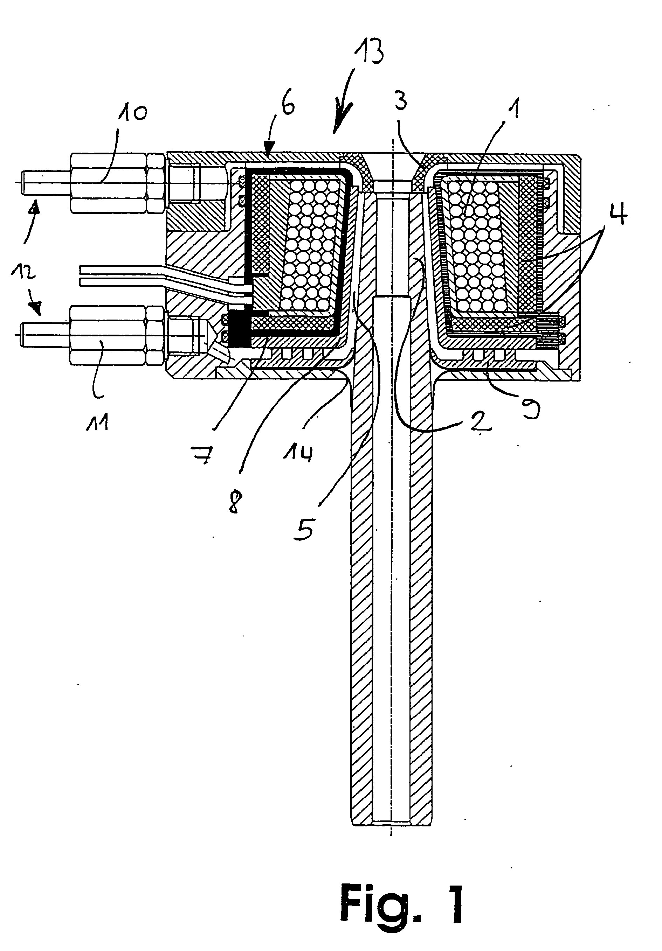

Die Fig. 1 zeigt ein erstes Ausführungsbeispiel der Erfindung. Die Induktionsspule 1 bildet zusammen mit dem Feldkonzentrator 3, der Hülsenpartie 2 des Werkzeugspannfutters und den Feldleiteinrichtungen 4 einen magnetischen Kreis, der bei aktivierter Spule 1 die Hülsenpartie 2 des Werkzeugspannfutters erhitzt.

Die Hülsenpartie 2 bildet dabei zusammen mit dem die Spule 1 umgebenden Spulengehäuse 6 einen Kühlkanal 5. Dieser wird beispielsweise mit Wasser durchspült, das i. d. R. mit Korrosionsinhibitoren versetzt sein wird. Es kann auch jedes andere geeignete Fluid verwendet werden, z. B. eine geeignete Flüssigkeit, wie etwa Glykol oder aber Gas oder verflüssigtes Gas. Der Kühlkanal erstreckt sich zwischen der Kühlmittelspeiseleitung 10 und der Kühlmittelabsaugleitung 11. Er ist bei eingesetztem Werkzeugspannfutter gegenüber der Umgebung zumindest weitestgehend abgedichtet.

Ein Abschnitt dieses Kühlkanals 5 läuft zwischen der inneren Oberfläche der durch eine kühlmitteldichte Kapselung 7 (z. B. Verguss) und einen Wärmeschutzschild 8 geschützten Induktionsspule 1 und der Hülsenpartie 2 entlang. Dabei bildet die Hülsenpartie entlang zumindest eines Teils dieses Bereichs unmittelbar eine der Wände des Kühlkanals 5, was einen hervorragenden Wärmeübergang ermöglicht.

Um dies zu realisieren ist im Bereich der Öffnung, über die die Hülsenpartie 2 in das Innere der Spule 1 eingeschoben wird, eine Stulpendichtung 14 vorgesehen. Diese ist derart weich ausgebildet, dass sie sich dicht an die Hülsenpartie anlegt, sobald diese in die Spule eingeschoben ist. An ihrer oberen freien Stirnfläche liegt die Hülsenpartie mit der nötigen Pressung an die entsprechend genau ausgeführte Gegenfläche des Feldkonzentrators 3 an. Die Anlage ist derart, dass auch hier eine Abdichtung erreicht wird - zumindest im Wesentlichen, nämlich in dem Sinne, dass während des nur wenige Augenblicke dauernden Kühlzyklus allenfalls einige wenige Tropfen Kühlmittel austreten, so dass die Hülsenpartie 2 bzw. das Futter allenfalls nur unerheblich nass werden.

Die Arbeitsweise der Vorrichtung ist, hier am Beispiel des Ausspannens geschildert, die Folgende:
Unmittelbar nach Beendigung des Aufheizvorganges wird der Schaft des auszuspannenden Werkzeugs aus der Hülsenpartie 2 herausgezogen.

Dann wird über die Kühlmittelspeiseleitung 10 mit Hilfe einer Kühlmittelpumpe oder des Druckes des Kühlmittelreservoirs bzw. Kühlmittelversorgungsnetzes Kühlmittel in den Spalt 5 eingespült. Dieses überstreicht die Hülsenpartie und kühlt sie innerhalb weniger Sekunden auf eine Temperatur ab, die eine gefahrlose Handhabung des Futters erlaubt. Im Regelfall liegt schon in diesem Stadium Unterdruck an der Kühlmittelabsaugleitung 11 an, um eventuell entstehenden Kühlmitteldampf abzusaugen. Ein Temperaturfühler im Rücklauf des Kühlmediums kann den Kühlvorgang überwachen, d. h. den Kühlvorgang beenden, sobald das rückströmende Kühlmittel eine bestimmte untere Grenztemperatur erreicht hat oder sich dessen Temperatur nicht mehr wesentlich ändert. Das Ende des Kühlvorganges kann optisch oder akustisch angezeigt werden.

Die Kühlmittelzufuhr wird nun gestoppt. Da spätestens jetzt an der Kühlmittelabsaugleitung 11 Unterdruck angelegt wird, wird das noch im Kühlkanal 5 befindliche Kühlmittel nahezu restlos abgezogen. Sofern die Kühlmittelspeise- und -absaugleitung mit hier nicht gezeigten 3-WegeVentilen ausgerüstet sind, wird nun ggf. für einige Sekunden Pressluft oder dergl. durch den Kühlkanal 5 geblasen, um die benetzte Oberfläche der Hülsenpartie zu trocknen. Dann wird die Hülsenpartie aus der Spule herausgezogen und der nächste Zyklus kann beginnen, indem die nächste Hülsenpartie dichtend in die Spule eingeschoben wird.

Ein wesentlicher Punkt ist, dass zu keinem Zeitpunkt eine Gefahr von Verbrennungen für den Bediener besteht, da der heiße Bereich des Futters zu keinem Zeitpunkt zugänglich ist, sondern vollständig von der Spule und der Kühleinrichtung abgedeckt wird.

Ein entscheidender Vorteil dieser Lösung ist, dass die Außenkontur der Hülsenpartie 2 in bestimmten Grenzen variieren kann, da wegen der direkten Benetzung keine besonderen Anforderungen an die Kontur der Hülsenpartie zu stellen sind.

Ein nicht unerheblicher Gesichtspunkt ist, dass die Induktionsspule 1 komplett vergossen bzw. umspritzt oder einvulkanisiert ist, so dass sie zuverlässig gegen ein Eindringen von Kühlmittel oder Kühlmitteldampf geschützt ist. Um die Dichtheit der Vergussmasse zu überprüfen, kann an die Spulenwicklung während eines Testzyklus eine geringe Spannung angelegt werden. Mit einer Gegenelektrode im Kühlmittelkreislauf wird gemessen, ob ein Stromfluss zwischen Spule und Kühlmittel stattfindet.

Da die Außendurchmesser der Hülsenpartien der in der Praxis zu schrumpfenden Futter sehr stark variieren, lassen sich bei Verwendung der hier gezeigten starren Induktionsspule nicht alle Hülsendurchmesser mit einer einzigen Spule schrumpfen. Daher gehört zu einer erfindungsgemäßen Vorrichtung oft nicht nur eine einzige solche Spule, sondern ein Spulensatz mit mehreren Spulen die austauschbar sind. Zweckmäßigerweise bildet jede Spule zusammen mit ihrem den Kühlkanal 5 bildenden Gehäuse 6 ein auswechselbares Modul. Dieses Modul ist über eine lösbare elektrische Verbindung und werkzeuglos zu betätigende Schnellkupplungen für die Kühlmittelversorgung an die übrige Vorrichtung angeschlossen. Es kann mit wenigen Handgriffen als gesamte Moduleinheit ein- und ausgebaut werden, je nachdem, welcher Hülsen-Durchmesser gerade zu schrumpfen ist. Dabei verbleibt die gesamte Kühlmittelführung bei der betreffenden Spule, wird also mit ihr ein- und ausgebaut, was eine schnelle und saubere Handhabung ermöglicht. Der Anlagenbediener kommt dabei praktisch nicht mit der Kühlflüssigkeit in Berührung. Im Rahmen der Erfindung ist es, anstelle eines Austauschs der einzelnen Spulen, auch möglich, alle Spulen eines Spulensatzes an die Vorrichtung anzuschließen und bei bedarf nur einzelne Spulen zu beschalten, d.h. mit Strom zu versorgen und in den Kühlmitteldurchlauf einzubinden.

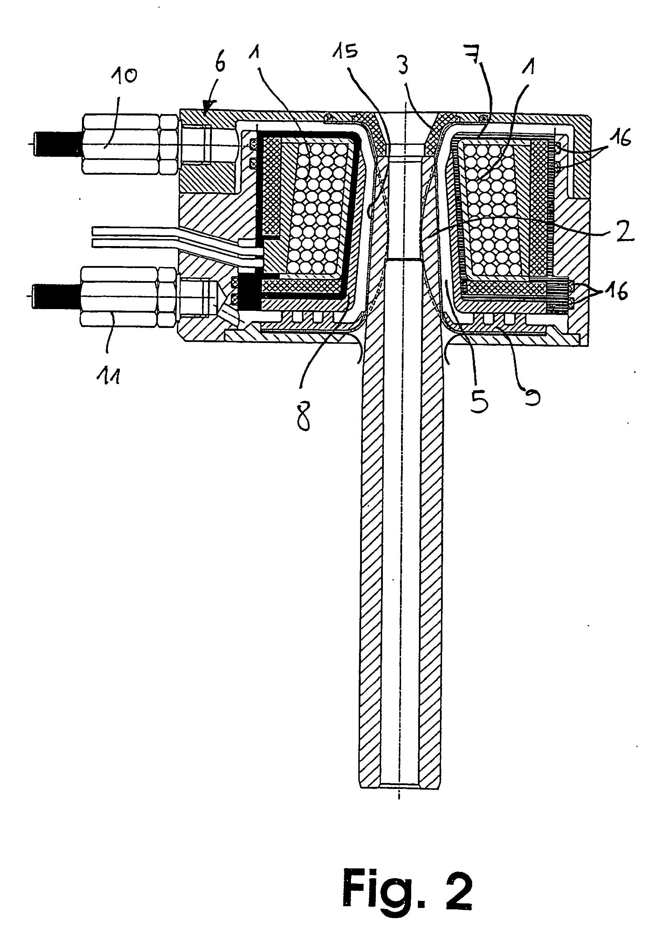

Die Fig. 2 zeigt ein alternatives Ausführungsbeispiel der Erfindung.

Der Unterschied zu dem von Fig. 1 gezeigten Ausführungsbeispiel besteht hier einzig und allein darin, dass die Hülsenpartie nicht unmittelbar mit dem Kühlmittel in Kontakt kommt, sondern nur über eine Dichtungsmembran 15 bzw. über einen Dichtungsbalg. Dementsprechend kann dann auch Stulpendichtung 14 entfallen, die hier jedoch als zusätzliche Dichtung noch umfasst ist.

Auch im Bereich des Feldkonzentrators 3 müssen keine besonderen Maßnahmen zur Abdichtung mehr getroffen werden. Denn auch in diesem Bereich dichtet die Dichtungsmembran 15 ab, die hier zwischen der Spule und dem Feldkonzentrator entlang läuft - hin zu der Stelle, an der sie mit ihrem tropfenförmigen bzw. wulstartigen Fortsatz in das Spulengehäuse 6 eingeknüpft ist.

Soweit dem nicht durch die Funktion der Dichtungsmembran bedingte Unterschiede entgegenstehen gilt daher das oben im Zusammenhang mit der Fig. 1 Gesagte hier entsprechend.

Nach der Erwärmung der Hülsenpartie wird zum Zwecke des Kühlens Kühlmittel durch den Spalt zwischen Spule und Dichtungsmembran 15 gepumpt. Die Dichtungsmembran bläht sich auf Grund des Kühlmitteldrucks auf und tritt in Flächenkontakt mit dem Futter (der in Fig. 2 gestrichelt angedeutete Verlauf der Dichtungsmembran 15 würde sich einstellen, wenn kein Futter bzw. keine Hülsenpartie eingeschoben wäre). Das Futter wird nicht benetzt und braucht daher nach dem Kühlvorgang nicht getrocknet zu werden. Das Kühlmittel fließt in einem geschlossenen Kreislauf. Es sind keine Dichtungen notwendig, die bei jedem neuen Zyklus so sauber an der Hülsenpartie anliegen müssen, dass eine ordnungsgemäße Abdichtung gegen die Hülsenpartie erreicht wird - und die damit eine Gefahr von Bedienungsfehlern und/oder Verschleiß bergen.

Ebenso bleibt die Kühleinrichtung im Rahmen der Flexibilität der Dichtungsmembran auch hier weitgehend unabhängig von der Kontur der Hülsenpartie. Es gilt also auch hier, gleichermaßen wie für Fig. 1, dass nahezu alle gängigen Futter gekühlt werden können und nicht nur solche die angepasst sind und mit der Gesamtvorrichtung ein teueres "System" bilden.

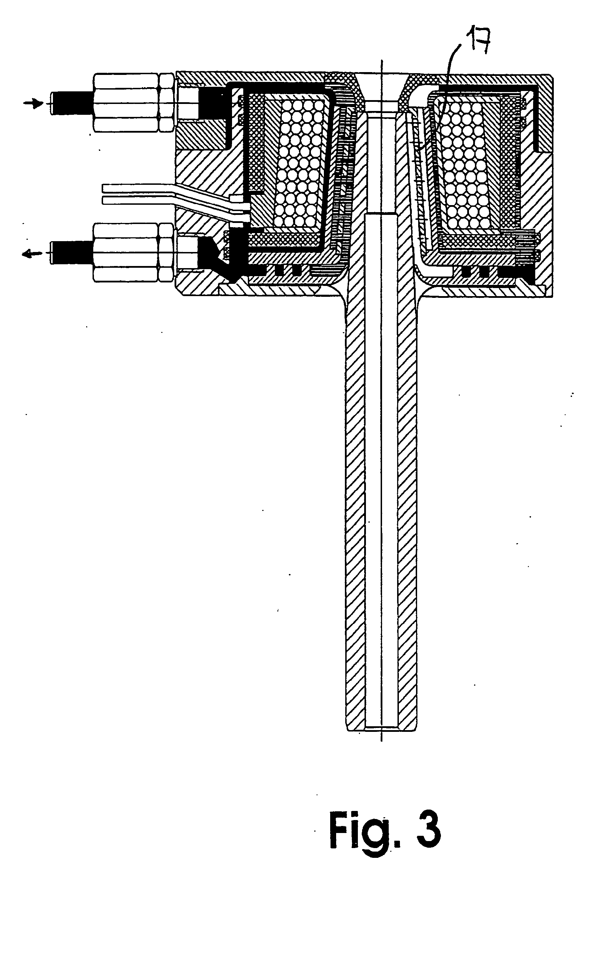

Die Fig. 3 zeigt ein weiteres Ausführungsbeispiel der Erfindung, das sich von dem durch Fig. 1 gezeigten Ausführungsbeispiel der Erfindung nur dadurch unterscheidet, dass hier zusätzlich ein Düsenkörper 17 in den Bereich des Kühlkanals 5 eingesetzt ist, der in der gezeigten Weise zwischen der inneren Umfangsfläche der Spule 1 und der Hülsenpartie 2 entlang läuft. Daher gilt auch hier das zu Fig. 1 Gesagte, soweit sich aus dem Prinzip des Düsenkörpers nichts anderes ergibt.

Der Düsenkörper 17 ist auf seiner der Spulenwicklung zugewandten Seite mit einem Einströmkanal für das Kühlmittel versehen. Weiterhin ist er mit hier in etwa in radialer Richtung verlaufenden Düsenbohrungen versehen, über die der auf der Seite des Einströmkanals anstehende Kühlmitteldruck weitgehend abgebaut wird und die dafür das Kühlmittel zerstäuben bzw. vernebeln und in diesem Zustand auf die zu kühlende Oberfläche der Hülsenpartie 2 auftreffen lassen, wo es ggf. verdampft. Der entstehende Dampf, bzw. das nach unten ablaufende Kühlmittel und Kondensat, werden über die Kühlmittelabsaugleitung 11 abgezogen.

Dieser Düsenkörper 17 hat den entscheidenden Vorteil, dass die benötigte Kühlmittelmenge entscheidend verringert werden kann. Der Prozess lässt sich hiermit ohne weiteres so steuern, dass das Kühlmittel auf der heißen Oberfläche der Hülsenpartie 2 weitgehend verdampft, was bekanntlich einen sehr hohen Energieumsatz mit sich bringt, d. h. eine effektive Kühlung bei kleiner Kühlmittelmenge. Dies kann insbesondere dort von Vorteil sein, wo die Anlage nicht an ein Kühlmittelnetz angeschlossen betrieben wird, sondern mit einem kleinen Kühlmittelvorrat auskommen muss. Zudem erübrigt sich u. U. das Problem der Kühlmittelabfuhr, da z. B. Wasserdampf oft kurzerhand in die Umgebung entlassen werden kann.

Vom Grundsatz her ist es denkbar, dass auch für die von der Fig. 3 gezeigte Ausführungsform eine Membran verwendet wird, wie in Fig. 2 gezeigt. Je nach Intensität der Bedüsung der Membran kann es hier aber u. U. zu einer zeitweilig sehr hohen thermischen Belastung der Membran 15 kommen, worauf zu achten ist.

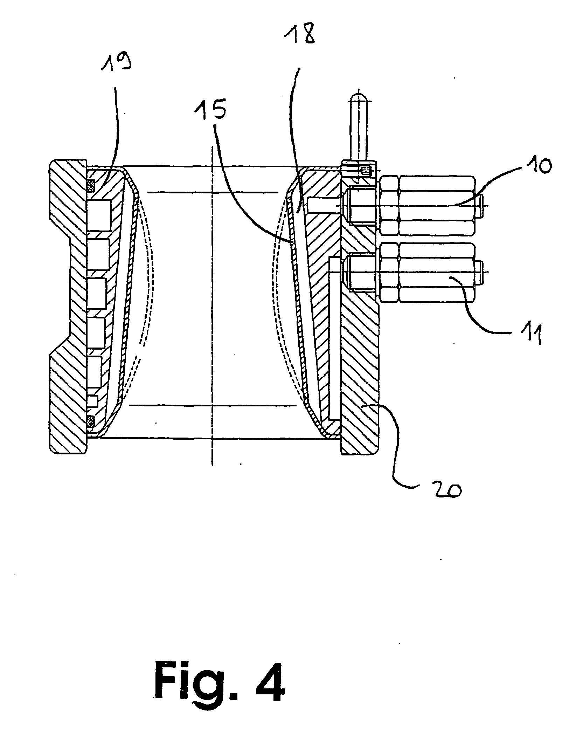

Die Fig. 4 zeigt ein weiteres Ausführungsbeispiel, hier allerdings nicht in Form einer integrierten Kühleinrichtung, sondern in Form einer separaten Kühleinrichtung. Diese besteht aus einer Außenhülse bzw. Manschette 20 die auf die bereits aus der Induktionsspule herausgezogene Hülsenpartie (Hülsenpartie in Fig. 4 nicht gezeigt) aufgeschoben wird.

Die Manschette 20 wird über entsprechende Anschlüsse mit Kühlmittel versorgt. Innen in die Manschette 20 ist, abgedichtet gegenüber der Manschette durch zwei Schnurdichtungen, ein als Wärmetauscher 19 zu bezeichnender hohlzylindrischer Körper eingesetzt bzw. eingepresst, der Nuten aufweist, die zusammen mit der Innenwand der Manschette einen Kühlkanal 5 bilden.

Das durch diesen Kühlkanal 5 strömende Kühlmittel kommt bei dieser Ausführungsart allerdings nicht unmittelbar mit der Hülsenpartie in Kontakt und ist auch nicht lediglich durch die Dichtungsmembran 15 von ihr getrennt. Stattdessen wird der Wärmetauscher 19 von der Dichtungsmembran 15 derart übergriffen und abgedichtet, dass zwischen dem Wärmetauscher 19 und der Dichtungsmembran 15 eine allseitig abgedichtete Tasche besteht. Diese ist mit einer vorzugsweise gelartigen Substanz gefüllt, welche ihrerseits gute Wärmeleiteigenschaften aufweist und als weiteres Kühlmittel fungiert.

Diese Substanz hat die Aufgabe für innigen Kontakt mit der zu kühlenden Hülsenpartie zu sorgen. Sie tut dies, indem sie zusammen mit der sie gefangen gehaltenen, elastischen Dichtungsmembran 15 eine Art "federndes Polster" bildet, das sich an die Hülsenpartie anschmiegt (in Fig. 4 ist diejenige Kontur, die das federnde Polster bei eingeschobener Hülsenpartie einnimmt, schraffiert gezeichnet; die Kontur, die das federnde Polster ansonsten, im unbelasteten Zustand einnimmt, ist ohne Schraffur dargestellt). Die besagte Substanz hat weiterhin die Aufgabe, die Wärme der Hülsenpartie über den Wärmetauscher an das im Kühlkanal 5 fließende Kühlmittel abzuführen.

Eine solche separate Kühleinheit hat den Vorteil, dass, anders als bei Integration, kein Kühlmittel im Nahbereich spannungsführender Teile fließt, also keine entsprechenden Sicherheitsvorkehrungen zu treffen sind. Zudem erlaubt sie ein synchrones Arbeiten - d.h. während ein Futter noch gekühlt wird, kann schon das nächste Futter in der Induktionsspule aufgeheizt werden.

Leicht nachzuvollziehen ist, dass das Kühlkonzept, dass die von Fig. 4 gezeigte separate Kühleinheit verwirklicht, auch für integrierte Kühlvorrichtungen sinnvoll zu verwenden ist, wie sie bspw. die Fig. 2 zeigt und wofür ebenfalls Schutz begehrt wird. Dieses Kühlkonzept, bei dem sich die Gefahr eines unerwünschten Austritts von Kühlmittel aus dem Kühlkanal (z. B. in Folge einer Beschädigung der Dichtungsmembran 15) leicht beherrschen lässt, ist insbesondere auch überall dort sinnvoll einsetzbar, wo anstatt mit Wasser bevorzugt mit einem Kühlmittel gearbeitet wird, das physiologisch nicht ganz unbedenklich ist oder aus anderen Gründen möglichst nicht austreten darf.

Umgekehrt ist leicht nachzuvollziehen, dass die von den Fig. 1 bis 3 gezeigten Kühlkonzepte auch für eine separate Kühleinheit, wie insbesondere in Fig. 4 gezeigt, nutzbringend einsetzbar sind, weshalb auch insoweit Schutz beansprucht wird.

Bei den von den Figuren wiedergegebenen Zeichnungen handelt es sich nicht nur um grobe Skizzen, sondern bereits um detaillierte Konstruktionszeichnungen weshalb sämtliche in den Zeichnungen wiedergegebenen Merkmale bedeutungsvoll im Sinne der jeweiligen Ausführungsform sind.

### Bezugszeichenliste

- 1: Induktionsspule
- 2: Hülsenpartie des Werkzeugspannfutters
- 3: Feldkonzentrator
- 4: Feldleiteinrichtungen
- 5: Kanal (Kühlkanal)
- 6: Gehäuse der Induktionsspule
- 7: Kapselung der Induktionsspule
- 8: Wärmeschutzschild für die Kapselung der Induktionsspule
- 9: Kühlmittelleiteinrichtung zur Intensivierung der Spulenkühlung
- 10: Kühlmittelspeiseleitung
- 11: Kühlmittelabsaugleitung
- 12: Schnellkupplung
- 13: Auswechselbares Modul aus Spule 1 und Gehäuse 6
- 14: Stulpendichtung
- 15: Dichtungsmembran bzw. -balg
- 16: Schnurdichtung
- 17: Düsenkörper
- 18: Kontaktgel
- 19: Wärmetauscher zwischen Kühlmittel und Kontaktgel
- 20: Außenhülse bzw. Manschette

## Patentansprüche

1. Vorrichtung zum Ein- und/oder Ausspannen von einen Werkzeugschaft aufweisenden Werkzeugen in ein Werkzeugspannfutter, das eine an ihrem freien Ende offene Hülsenpartie (2) aus elektrisch leitendem Werkstoff zur reibschlüssigen Aufnahme des Werkzeugschafts aufweist, mit einer die Hülsenpartie (2) des Werkzeugspannfutters umfassenden, mit einem vorzugsweise hochfrequenten Wechselstrom beaufschlagbaren, als Ring- oder Zylinderspule ausgebildeten Induktionsspule (1), wobei die Vorrichtung mindestens einen zwischen der inneren Umfangsfläche der Induktionsspule (1) und der Hülsenpartie (2) des Werkzeugspannfutters entlanglaufenden Kanal (5) umfasst, durch den ein die Hülsenpartie (2) des Werkzeugspannfutters kühlendes Kühlmittel hindurchgespült wird, wobei der Kanal (5) derart ausgestaltet und geführt ist, dass das Kühlmittel zumindest streckenweise direkt mit der Hülsenpartie (2) in Kontakt kommt, indem die Hülsenpartie (2) abschnittweise eine Wand des Kanals (5) bildet, **dadurch gekennzeichnet, dass** an der Öffnung, über die die Hülsenpartie (2) in die Spule (1) eingeschoben bzw. wieder herausgezogen wird, eine Dichtung (14) angebracht ist, die bei in der Spule (1) gehaltener Hülsenpartie (2) den eine Wand des Kanals (5) bildenden Abschnitt der Hülsenpartie (2) gegen die sich daran anschließende Wand des Kanals (5) abdichtet, wobei die Dichtung (14) in Form einer Stulpen- oder flexiblen Lippendichtung ausgeführt ist.

2. Vorrichtung nach Anspruch 1, **dadurch gekennzeichnet, dass** ein Feldkonzentrator (3) über den das Magnetfeld in die freie Stirnfläche der Hülsenpartie (2) eingeleitet wird, dichtend gegen die Stirnfläche der Hülsenpartie (2) anliegt, derart, dass über die Kontaktfläche zwischen dem Feldkonzentrator (3) und der Stirnfläche der Hülsenpartie (2) im Wesentlichen kein Kühlmittel austreten kann.

3. Vorrichtung nach Anspruch 1, **dadurch gekennzeichnet, dass** der Kanal (5) derart ausgestaltet und geführt ist, dass das Kühlmittel unter Zwischenlage einer die Wärmeleitung nicht wesentlich behindernden Dichtung (15), wie etwa einer Dichtungsmembran oder einem Dichtungsbalg mit der Hülsenpartie (2) in wärmeleitenden Kontakt kommt.

4. Vorrichtung zum Ein- und/oder Ausspannen von einen Werkzeugschaft aufweisenden Werkzeugen in ein Werkzeugspannfutter, das eine an ihrem freien Ende offene Hülsenpartie (2) aus elektrisch leitendem Werkstoff zur reibschlüssigen Aufnahme des Werkzeugschafts aufweist, mit einer die Hülsenpartie (2) des Werkzeugspannfutters umfassenden, mit einem vorzugsweise hochfrequenten Wechselstrom beaufschlagbaren, als Ring- oder Zylinderspule ausgebildeten Induktionsspule (1), wobei die Vorrichtung mindestens einen zwischen der inneren Umfangsfläche der Induktionsspule (1) und der Hülsenpartie (2) des Werkzeugspannfutters entlanglaufenden Kanal (5) umfasst, durch den ein die Hülsenpartie (2) des Werkzeugspannfutters kühlendes Kühlmittel hindurchgespült wird, **dadurch gekennzeichnet, dass** der Kanal (5) derart ausgestaltet und geführt ist, dass das Kühlmittel zumindest streckenweise ein weitgehend ortsfestes weiteres Kühlmittel in Form eines Kontaktgels (18), kühlt, welches direkt oder allenfalls unter Zwischenlage einer die Wärmeleitung nicht wesentlich behindernden flexiblen Dichtungsmembran (15) mit der Hülsenpartie (2) in wärmeleitenden Kontakt kommt.

5. Vorrichtung zum Ein- und/oder Ausspannen von einen Werkzeugschaft aufweisenden Werkzeugen in ein Werkzeugspannfutter, das eine an ihrem freien Ende offene Hülsenpartie (2) aus elektrisch leitendem Werkstoff zur reibschlüssigen Aufnahme des Werkzeugschafts aufweist, mit einer die Hülsenpartie (2) des Werkzeugspannfutters umfassenden, mit einem vorzugsweise hochfrequenten Wechselstrom beaufschlagbaren, als Ring- oder Zylinderspule ausgebildeten Induktionsspule (1), wobei die Vorrichtung mindestens einen zwischen der inneren Umfangsfläche der Induktionsspule (1) und der Hülsenpartie (2) des Werkzeugspannfutters entlanglaufenden Kanal (5) umfasst, durch den ein die Hülsenpartie (2) des Werkzeugspannfutters kühlendes Kühlmittel hindurchgespült wird, wobei der Kanal (5) derart ausgestaltet und geführt ist, dass das Kühlmittel unter Zwischenlage einer die Wärmeleitung nicht wesentlich behindernden Dichtung (15), wie etwa einer Dichtungsmembran, mit der Hülsenpartie (2) in wärmeleitenden Kontakt kommt, **dadurch gekennzeichnet, dass** der Kanal (5) zur Bildung eines hydraulisch bzw. pneumatisch vollständig geschlossenen Pfades zumindest abschnittsweise eine flexiblen Dichtungsmembran (15) umfasst, die sich unter dem Druck des Kühlmittels an die zu kühlende Oberfläche der Hülsenpartie (2) anschmiegt.

6. Vorrichtung zum Ein- und/oder Ausspannen von einen Werkzeugschaft aufweisenden Werkzeugen in ein Werkzeugspannfutter, das eine an ihrem freien Ende offene Hülsenpartie (2) aus elektrisch leitendem Werkstoff zur reibschlüssigen Aufnahme des Werkzeugschafts aufweist, mit einer die Hülsenpartie (2) des Werkzeugspannfutters umfassenden, mit einem vorzugsweise hochfrequenten Wechselstrom beaufschlagbaren, als Ring- oder Zylinderspule ausgebildeten Induktionsspule (1), wobei die Vorrichtung mindestens einen zwischen der inneren Umfangsfläche der Induktionsspule (1) und der Hülsenpartie (2) des Werkzeugspannfutters entlanglaufenden Kanal (5) umfasst, durch den ein die Hülsenpartie (2) des Werkzeugspannfutters kühlendes Kühlmittel hindurchgespült wird, wobei der Kanal (5) derart ausgestaltet und geführt ist, dass das Kühlmittel unter Zwischenlage einer die Wärmeleitung nicht wesentlich behindernden Dichtung (15), wie etwa einer Dichtungsmembran, mit der Hülsenpartie (2) in wärmeleitenden Kontakt kommt, **dadurch gekennzeichnet, dass** der Kanal (5) zur Bildung eines hydraulisch bzw. pneumatisch vollständig geschlossenen Pfades einen vorzugsweise kühlmitteldruckbeständigen Wärmetauscher (19) umfasst, der seinerseits ein weiteres Kühlmittel, wie etwa ein Kontaktgel (18) kühlt, das zumindest abschnittweise zwischen dem Wärmetauscher (19) und einer flexiblen Dichtungsmembran (15) gehalten ist und das ein inniges Anschmiegen der flexiblen Dichtungsmembran (15) an die zu kühlende Oberfläche der Hülsenpartie (2) bewirkt.

7. Vorrichtung nach einem der Ansprüche 5 oder 6, **dadurch gekennzeichnet, dass** die Dichtungsmembran (15) bzw. der Dichtungsbalg aus einem hochtemperaturbeständigen Elastomer besteht, vorzugsweise einem Elastomer der Gruppe der Fluorkautschuke.

8. Vorrichtung nach einem der vorhergehenden Ansprüche, **dadurch gekennzeichnet, dass** die Induktionsspule (1) derart vergossen ist, dass sie vollständig kühlmittel- bzw. kühlmitteldampfdicht ist, vorzugsweise in dem die Induktionsspule (1) rundum mit einem Elastomer umspritzt ist, und dass die Umspritzung der Induktionsspule (1) vorzugsweise mittels eines zumindest örtlichen Schutzschildes (8) aus geeignetem weder elektrisch noch magnetisch leitendem Material, vorzugsweise Keramik, vor unzulässig stark hitzeübertragendem Kontakt mit der Hülsenpartie (2) geschützt ist.

9. Vorrichtung nach einem der vorhergehenden Ansprüche, **dadurch gekennzeichnet, dass** äußere Umfangsfläche und die äußeren Stirnflächen der Induktionsspule (1) von einem Gehäuse (6) umschlossen sind, das weitere Abschnitte des kühlmittelführenden Kanals (5) ausbildet und vorzugsweise die Anschlüsse für die Kühlmittelspeiseleitung (10) und die Kühlmittelabzugsleitung (11) trägt.

10. Vorrichtung nach Anspruch 9, **dadurch gekennzeichnet, dass** die Spule (1) längs ihrer Hauptachse in eine entsprechende Ausnehmung des Gehäuses (6) eingesetzt ist und mit an ihrer äußeren Umfangsfläche am Gehäuse gegen Kühlmitteldurchtritt in den Spalt zwischen Spule (1) und Gehäuse abgedichtet ist.

11. Vorrichtung nach einem der vorhergehenden Ansprüche in Verbindung mit Anspruch 9, **dadurch gekennzeichnet, dass** die Einheit aus Spule (1) und Gehäuse (6) ein auswechselbares Modul bildet, und jede Schrumpfvorrichtung mehrere solcher Module umfasst, wobei sich die einzelnen Module durch ihren Spuleninnendurchmesser unterscheiden, d. h. durch den Außendurchmesserbereich der Hülsenabschnitte mit ihnen zu bearbeitenden Werkzeugaufnahmen.

12. Vorrichtung nach einem der vorhergehenden Ansprüche, insbesondere Anspruch 11, **dadurch gekennzeichnet, dass** die Kühlmittelspeiseleitung (10) und die Kühlmittelabzugsleitung (11) über werkzeuglos zu betätigende Schnellkupplungen an- und abgekuppelt werden können.

13. Vorrichtung nach einem der vorhergehenden Ansprüche, **dadurch gekennzeichnet, dass** der Kanal (5) einen Düsenkörper (17) umfasst, der auf der einen Seite von der Kühlmittelspeiseleitung (10) beaufschlagt wird und feine Bohrungen aufweist, über die das Kühlmittel in einen durch den Düsenkörper (17) und den Hülsenabschnitt gebildeten Höhlraum und vorzugsweise direkt gegen den Hülsenabschnitt eingedüst, vorzugsweise zerstäubt wird, wobei der Hohlraum mit der Kühlmittelabzugsleitung (11) in Verbindung steht, die das in den Hohlraum eingedüste Kühlmittel und ggf. auch den dort entstandenen Kühlmitteldampf abzieht.

14. Vorrichtung nach einem der vorhergehenden Ansprüche, **dadurch gekennzeichnet, dass** der Kanal (5) so ausgebildet ist, dass das Kühlmittel spiral- oder mäanderförmig an der Spule (1) entlang fließt, so dass der Wärmetausch zwischen der Spule (1) und dem Kühlmittel intensiviert wird.

## Claims

1. A device for clamping and/or unclamping tools, comprising a tool shaft, in a tool chuck, which comprises a sleeve section (2), which is open at its free end and which is made of electrically conductive material for friction locked receiving of the tool shaft, with an induction coil (1), comprising the sleeve section (2) of the tool chuck, which induction coil can be loaded with a preferably high frequency AC current and which is configured as an annular coil or a cylindrical coil, wherein the device comprises at least one channel (5), extending between the inner circumferential surface of the induction coil (1) and the sleeve section (2) of the tool chuck, through which channel a coolant is flowed, which cools the sleeve section (2) of the tool chuck wherein the channel (5) is configured and routed, so that the coolant directly contacts the sleeve section (2) at least in sections, wherein the sleeve section (2) forms a wall of the channel (5) in sections **characterized in that** a seal (14) is disposed at the opening, through which the sleeve section (2) is inserted into the coil (1) or removed there from, which seal seals the section of the sleeve section (2), which forms a wall of the channel (5), against the wall of the channel (5), connecting with said sleeve section, when the sleeve section (2) is held in the coil (1), wherein the seal (14) is preferably provided in the form of a fold-over seal or in the form of a flexible lip seal.

2. A device according to claim 1, **characterized in that** a field concentrator (3), through which the magnetic field is inducted into the free face of the sleeve section (2), contacts the face of the sleeve section (2) so it seals, so that substantially no coolant can exit through the contact surface between the field concentrator (3) and the face of the sleeve section (2).

3. A device according to claim 1, **characterized in that** the channel (5) is configured and routed, so that the coolant comes into heat transferring contact with the sleeve section (2) with a seal (15), like e.g. a seal membrane or a seal bellows, placed there between, which does not substantially impede heat transfer.

4. A device for clamping and/or unclamping tools, comprising a tool shaft, in a tool chuck, which comprises a sleeve section (2), which is open at its free end and which is made of electrically conductive material for friction locked receiving of the tool shaft, with an induction coil (1), comprising the sleeve section (2) of the tool chuck, which induction coil can be loaded with a preferably high frequency AC current and which is configured as an annular coil or a cylindrical coil, wherein the device comprises at least one channel (5), extending between the inner circumferential surface of the induction coil (1) and the sleeve section (2) of the tool chuck, through which channel a coolant is flowed, which cools the sleeve section (2) of the tool chuck **characterized in that** the channel (5) is configured and routed, so that the coolant at least over a certain distance cools a substantially locally fixated additional coolant in form of a contact gel (18), which comes into heat conducting contact with the sleeve section (2), either directly, or at the most with a seal (15) not substantially restricting heat transfer.

5. A device for clamping and/or unclamping tools, comprising a tool shaft, in a tool chuck, which comprises a sleeve section (2), which is open at its free end and which is made of electrically conductive material for friction locked receiving of the tool shaft, with an induction coil (1), comprising the sleeve section (2) of the tool chuck, which induction coil can be loaded with a preferably high frequency AC current and which is configured as an annular coil or a cylindrical coil, wherein the device comprises at least one channel (5), extending between the inner circumferential surface of the induction coil (1) and the sleeve section (2) of the tool chuck, through which channel a coolant is flowed, which cools the sleeve section (2) of the tool chuck wherein the channel (5) is configured and routed so that the coolant gets into a thermo-conductive contact with the sleeve section by means of an intermediate layer of a seal (15) which does not essentially hinder the seal (15), e.g. a seal membrane, **characterized in that** the channel (5) comprises a flexible seal membrane (15) at least in sections, in order to form a hydraulically or pneumatically completely closed path, which seal membrane (15) contacts and conforms to the surface of the sleeve section (2) to be cooled.

6. A device for clamping and/or unclamping tools, comprising a tool shaft, in a tool chuck, which comprises a sleeve section (2), which is open at its free end and which is made of electrically conductive material for friction locked receiving of the tool shaft, with an induction coil (1), comprising the sleeve section (2) of the tool chuck, which induction coil can be loaded with a preferably high frequency AC current and which is configured as an annular coil or a cylindrical coil, wherein the device comprises at least one channel (5), extending between the inner circumferential surface of the induction coil (1) and the sleeve section (2) of the tool chuck, through which channel a coolant is flowed, which cools the sleeve section (2) of the tool chuck wherein the channel (5) is configured and routed so that the coolant gets into a thermo-conductive contact with the sleeve section by means of an intermediate layer of a seal (15) which does not essentially hinder the seal (15), e.g. a seal membrane **characterized in that** the channel (5) for forming a hydraulically or pneumatically completely closed path comprises a preferably coolant pressure resistant heat exchanger (19), which in turn cools another coolant, like e.g. a contact gel (18), which is held at least in sections between the heat exchanger (19) and a flexible seal membrane (15), and which causes a close conformal contact of the flexible seal membrane (15) with the surface of the sleeve section (2) to be cooled.

7. A device according to one of the claims 5 or 6, **characterized in that** the seal membrane (15) or the seal bellows is made of a high temperature resistant elastomer, preferably an elastomer from the group of fluoride-rubbers.

8. A device according to one of the preceding claims, **characterized in that** the induction coil (1) is casted so that it is completely coolant-proof or coolant vapour proof, preferably by injection-moulding the induction coil (1) all around with an elastomer, and that the injection-moulding of the induction coil (1) is protected preferably by an at least local shield (8), which is made of a suitable material, which is neither electrically- nor magnetically conductive, preferably ceramic, against an excessively heat transferring contact with the sleeve section (2).

9. A device according to one of the preceding claims, **characterized in that** the outer circumferential surface and the outer face of the induction coil (1) are enclosed by a housing (6), which forms other sections of the coolant routing channel (5) and which preferably supports the connections for the coolant feed conduit (10) and for the coolant scavenging conduit (11).

10. A device according to claim 9, **characterized in that** the coil (1) is inserted along its main axis into a respective recess of the housing (6), and sealed at the housing against coolant exit into the gap between the coil (1) and the housing.

11. A device according to one of the preceding claims, in combination with claim 9, wherein the unit made of coil (1) and housing (6) forms an exchangeable module, and each shrink device comprises plural such modules, wherein the particular modules differ through their inner coil diameter, this means through the outer diameter range of the sleeve sections of the tool chucks to be operated.

12. A device according to one of the preceding claims, in particular according to claim 11, **characterized in that** the coolant feed conduit (10) and the coolant scavenging conduit (11) can be coupled and decoupled by quick couplings, which can be operated without tools.

13. A device according to one of the preceding claims, **characterized in that** the channel (5) comprises a jet body (17), which is impacted on the one side by the coolant feed conduit (10), and which comprises fine bore holes, through which the coolant is jetted into a cavity formed by the jet body (17) and by the sleeve section, and preferably directly jetted against the sleeve section, preferably atomized, wherein the cavity is connected to the coolant scavenging conduit (11), which scavenges the coolant jetted into the cavity and also the coolant vapor created there.

14. A device according to one of the preceding claims, **characterized in that** the channel (5) is configured, so that the coolant flows in a spiral- or racetrack pattern along the coil (1), so that the heat exchange between the coil (1) and the coolant is intensified.

## Revendications

1. Dispositif de serrage et/ou desserrage d'outils dotés d'une tige d'outil dans un mandrin d'outil qui comporte une partie formant manchon (2), ouverte à son extrémité libre, en matériau électriquement conducteur destinée à recevoir par friction la tige de l'outil, ledit dispositif comportant une bobine d'induction (1), configurée en bobine annulaire ou cylindrique, qui comporte la partie formant manchon (2) du mandrin d'outil et qui peut être alimentée en courant alternatif de préférence à haute fréquence, le dispositif comportant au moins un conduit (5) qui s'étend entre la surface circonférentielle intérieure de la bobine d'induction (1) et la partie formant manchon (2) du mandrin d'outil et à travers lequel circule un agent de refroidissement refroidissant la partie formant manchon (2) du mandrin d'outil, le conduit (5) étant configuré de telle sorte que l'agent de refroidissement vient au moins en partie directement en contact avec la partie formant manchon (2) en raison du fait que la partie formant manchon (2) forme par endroits une paroi du conduit (5), **caractérisé en ce qu'**une garniture d'étanchéité (14) est montée au niveau de l'orifice par lequel la partie formant manchon (2) est introduite dans la bobine (1) ou retirée de celle-ci, laquelle garniture d'étanchéité, lorsque la partie formant manchon (2) est maintenue dans la bobine (1), assurant l'étanchéité de la portion de la partie formant manchon (2), qui forme une paroi du conduit (5), vis-à-vis de la paroi du conduit (5) se raccordant à celle-ci, la garniture d'étanchéité (14) étant réalisée sous la forme d'un fourreau d'étanchéité ou d'une lèvre d'étanchéité souple.

2. Dispositif selon la revendication 1, **caractérisé en ce qu'**un concentrateur de champ (3), permettant d'introduire le champ magnétique dans la surface d'extrémité libre de la partie formant manchon (2), porte de manière étanche contre la surface d'extrémité de la partie formant manchon (2) de telle sorte qu'il n'y a pratiquement pas de fuite d'agent de refroidissement par la surface de contact entre le concentrateur de champ (3) et la surface d'extrémité de la partie formant manchon (2).

3. Dispositif selon la revendication 1, **caractérisé en ce que** le conduit (5) est ménagé et configuré de telle sorte que l'agent de refroidissement vient en contact thermo-conducteur avec la partie formant manchon (2) avec interposition d'une garniture d'étanchéité (15), comme par exemple une membrane d'étanchéité ou un soufflet d'étanchéité, qui n'entrave pas de manière significative la conduction de chaleur.

4. Dispositif de serrage et/ou desserrage d'outils dotés d'une tige d'outil dans un mandrin d'outil qui comporte une partie formant manchon (2), ouverte à son extrémité libre, en matériau électriquement conducteur afin de recevoir par friction la tige de l'outil, ledit dispositif comportant une bobine d'induction (1), configurée en bobine annulaire ou cylindrique, qui comporte la partie formant manchon (2) du mandrin d'outil et qui peut être alimentée en courant alternatif de préférence à haute fréquence, le dispositif comportant au moins un conduit (5) qui s'étend entre la surface circonférentielle intérieure de la bobine d'induction (1) et la partie formant manchon (2) du mandrin d'outil et à travers lequel circule un agent de refroidissement refroidissant la partie formant manchon (2) du mandrin d'outil, **caractérisé en ce que** le conduit (5) est ménagé et configuré de telle sorte que l'agent de refroidissement refroidit au moins en partie un autre agent de refroidissement pratiquement immobile se présentant sous la forme d'un gel de contact (18) qui vient en contact thermo-conducteur avec la partie formant manchon (2) soit directement soit éventuellement avec interposition d'une membrane d'étanchéité souple (15) qui n'entrave pas de manière significative la conduction de chaleur.

5. Dispositif de serrage et/ou desserrage d'outils dotés d'une tige d'outil dans un mandrin d'outil qui comporte une partie formant manchon (2), ouverte à son extrémité libre, en matériau électriquement conducteur afin de recevoir par friction la tige de l'outil, ledit dispositif comportant une bobine d'induction (1), configurée en bobine annulaire ou cylindrique, qui comporte la partie formant manchon (2) du mandrin d'outil et qui peut être alimentée en courant alternatif de préférence à haute fréquence, le dispositif comportant au moins un conduit (5) qui s'étend entre la surface circonférentielle intérieure de la bobine d'induction (1) et la partie formant manchon (2) du mandrin d'outil et à travers lequel circule un agent de refroidissement refroidissant la partie formant manchon (2) du mandrin d'outil, le conduit (5) étant ménagé et configuré de telle sorte que l'agent de refroidissement vient en contact thermo-conducteur avec la partie formant manchon (2) avec interposition d'une garniture d'étanchéité (15), comme par exemple une membrane d'étanchéité, qui n'entrave pas de manière significative la conduction de chaleur, **caractérisé en ce que**, pour former un chemin hydraulique ou pneumatique entièrement fermé, le conduit (5) comporte au moins en partie une membrane d'étanchéité flexible (15) qui épouse, à la pression de l'agent de refroidissement, la surface à refroidir de la partie formant manchon (2).

6. Dispositif de serrage et/ou desserrage d'outils dotés d'une tige d'outil dans un mandrin d'outil qui comporte une partie formant manchon (2), ouverte à son extrémité libre, en matériau électriquement conducteur afin de recevoir par friction la tige de l'outil, ledit dispositif comportant une bobine d'induction (1), configurée en bobine annulaire ou cylindrique, qui comporte la partie formant manchon (2) du mandrin d'outil et qui peut être alimentée en courant alternatif de préférence à haute fréquence, le dispositif comportant au moins un conduit (5) qui s'étend entre la surface circonférentielle intérieure de la bobine d'induction (1) et la partie formant manchon (2) du mandrin d'outil et à travers lequel circule un agent de refroidissement refroidissant la partie formant manchon (2) du mandrin d'outil, le conduit (5) étant ménagé et configuré de telle sorte que l'agent de refroidissement vient en contact thermo-conducteur avec la partie formant manchon (2) avec interposition d'une garniture d'étanchéité (15), comme par exemple une membrane d'étanchéité, qui n'entrave pas de manière significative la conduction de chaleur, **caractérisé en ce que**, pour former un chemin hydraulique ou pneumatique entièrement fermé, le conduit (5) comporte un échangeur de chaleur, résistant de préférence à la pression de l'agent de refroidissement (19), qui refroidit de son côté un autre agent de refroidissement, comme exemple un gel de contact (18), qui est maintenu au moins en partie entre l'échangeur de chaleur (19) et une membrane d'étanchéité souple (15) et qui permet à la membrane d'étanchéité souple (15) d'épouser intimement la surface à refroidir de la partie formant manchon (2).

7. Dispositif selon l'une des revendications 5 ou 6, **caractérisé en ce que** la membrane d'étanchéité (15) ou le soufflet d'étanchéité est formé à partir d'en élastomère résistant à des températures élevées, de préférence d'un élastomère du groupe des caoutchoucs fluorés.

8. Dispositif selon l'une quelconque des revendications précédentes, **caractérisé en ce que** la bobine d'induction (1) est moulé de telle sorte qu'elle est complètement étanche à l'agent de refroidissement ou à la vapeur d'agent de refroidissement, de préférence la bobine d'induction (1) est complètement enrobée d'un élastomère, et **en ce que** l'enrobage de la bobine d'induction (1) est de préférence protégé contre tout contact, fortement thermo-conducteur et indésirable, avec la partie formant manchon (2) au moyen d'un blindage (8), au moins local, constitué d'un matériau approprié électriquement et magnétiquement non-conducteur, de préférence une céramique.

9. Dispositif selon l'une des revendications précédentes, **caractérisé en ce que** la surface périphérique extérieure et les surfaces d'extrémité extérieures de la bobine d'induction (1) sont enfermées par un boîtier (6) qui forme d'autres parties du premier conduit (5) d'agent de refroidissement et qui supporte de préférence les raccords destinés au conduit (10) d'alimentation en agent de refroidissement et au conduit (11) d'évacuation d'agent de refroidissement.

10. Dispositif selon la revendication 9, **caractérisé en ce que** la bobine (1) est inséré le long de son axe principal dans un évidement correspondant du boîtier (6) et est rendue étanche au niveau de sa surface périphérique extérieure sur le boîtier vis-à-vis de tout passage d'agent de refroidissement dans l'espace entre la bobine (1) et le boîtier.

11. Dispositif selon l'une quelconque des revendications précédentes en combinaison avec la revendication 9, **caractérisé en ce que** l'unité constituée de la bobine (1) et du boîtier (6) forme un module interchangeable, et tout dispositif de retrait comporte une pluralité de ces modules, les modules individuels se distinguant par le diamètre intérieur de bobine, c'est-à-dire par la région du diamètre extérieur des parties formant manchon dotées de leurs logements d'outil à usiner.

12. Dispositif selon l'une des revendications précédentes, en particulier la revendication 11, **caractérisé en ce que** le conduit (10) d'alimentation en agent de refroidissement et le conduit (11) d'évacuation d'agent de refroidissement peuvent être accouplés et désaccouplés au moyen de dispositifs d'accouplement rapide fonctionnant sans outil.

13. Dispositif selon l'une des revendications précédentes, **caractérisé en ce que** le conduit (5) comprend un corps de buse (17) qui est alimenté sur un côté par le conduit (10) d'alimentation en agent de refroidissement et qui comporte de petits perçages par lesquels l'agent de refroidissement est injecté, de préférence pulvérisé, dans une cavité ménagée à travers le corps de buse (17) et la partie formant manchon, et de préférence directement contre la partie formant manchon, la cavité étant en liaison avec le conduit (11) d'évacuation d'agent de refroidissement qui est élimine l'agent de refroidissement injecté dans la cavité et éventuellement également la vapeur d'agent de refroidissement générée.

14. Dispositif selon l'une des revendications précédentes, **caractérisé en ce que** le conduit (5) est configuré de telle sorte que l'agent de refroidissement s'écoule en spirale ou en méandres le long de la bobine (1) de sorte que l'échange de chaleur entre la bobine (1) et l'agent de refroidissement est intensifié.
